Europäisches Patentamt

European Patent Office

Office européen des brevets

(11) Publication number: **0 109 230**
**A1**

(12) **EUROPEAN PATENT APPLICATION**

(21) Application number: 83306687.1

(22) Date of filing: 03.11.83

(51) Int. Cl.³: **F 16 D 55/14**

(30) Priority: 16.11.82 GB 8232659

(43) Date of publication of application: 23.05.84
Bulletin 84/21

(84) Designated Contracting States: DE FR IT

(71) Applicant: **LUCAS INDUSTRIES public limited company,**
**Great King Street, Birmingham, B19 2XF (GB)**

(72) Inventor: **Campbell, Roy, 1 Maribrook Lane Lickey Rock,**
**Nr. Bromsgrove Worcestershire (GB)**
Inventor: **Price, Anthony George, 478 Gospel Lane,**
**Acocks Green Birmingham B27 7AP (GB)**
Inventor: **Bishop, Robert Reginald, 81 Dene Court Road**
**Olton, Solihull West Midlands B92 8DQ (GB)**
Inventor: **Bharj, Davinder Singh, 15 St. Benedict's Close**
**Sandwell Valley, West Bromwich West Midlands B70 6TD**
**(GB)**

(74) Representative: **Spall, Christopher John et al, BARKER,**
**BRETTELL & DUNCAN 138 Hagley Road, Edgbaston**
**Birmingham B16 9PW (GB)**

(54) Disc brakes for vehicles.

(57) In a disc brake a pair of friction discs (7,8) are located between radial braking surfaces (3, 4) at opposite ends of a housing (2), and an expander mechanism is located between the discs (7, 8). The expander mechanism comprises a rotatable actuator member (10), a non-rotatable reaction member (9), balls or rollers (11) located in oppositely inclined recesses (12) in adjacent faces of the members (9, 10), and a linkage (22, 23) for moving the actuator member (10) angularly in the housing (2) about the axis of the brake in a direction opposite to the normal direction of forward rotation of the friction discs (7, 8), whereby to cause the balls or rollers (11) to ride out of the recesses (12) and cause the members (9, 10) to move axially to apply the brake. The actuator member (10) acts in a similar manner to that of a trailing shoe in a shoe-drum brake, being urged, when the brake is applied, in a direction opposite to the normal forward direction of disc rotation.

# DISC BRAKES FOR VEHICLES

This invention relates to disc brakes for vehicles of the kind in which at least one friction disc rotatable within a stationary housing is adapted to be moved into engagement with a relatively stationary surface, and actuating means are provided for moving the disc into engagement with the said surface to apply the brake.

In some known brakes of this kind, used on tractors and similar vehicles, the actuating means comprises a pair of pressure plates which are disposed between a pair of rotatable discs and are centred by stationary pilot lugs. Balls or rollers are located in co-operating individual recesses in the adjacent faces of the pressure plates and the application of the brake is initiated by moving the pressure plates angularly in opposite directions, the pressure plates then moving apart into engagement with the discs which are urged into engagement with axially spaced radial surfaces in the housing. The pressure plates are carried round with the friction disc until one, known as the actuator plate, is arrested by the engagement of a lug on that plate with a drag-taking stop abutment in the housing and the continued angular movement of the other plate, known as the servo-plate, provides a servo-effect.

When such known brakes are utilised in installations in which the friction discs are rotatable at high speeds, as is common in vehicles having a high reduction ratio, the torque required to generate a braking force is relatively low. In fact a substantial part of a total input load will be utilised in overcomming spring and like opposing forces and only a relatively small part will be utilised in generating the braking force. This will lead to uneven braking and work sharing between the brakes of a pair of wheels on opposite sides of a vehicle unless the tolerance variations for both brakes, which affect the magnitude of the spring and like opposing forces, are substantially equal. This is very difficult to achieve in practice.

According to our invention in a brake of the kind set forth the actuating means comprises a rotatable actuator member, a non-rotatable reaction member, balls or rollers located in oppositely inclined recesses in adjacent faces of the two members, and means for moving the actuator member angularly in the housing about the axis of the brake in a direction opposite to the normal direction of forward rotation of the friction disc whereby to cause the balls or rollers to tend to ride out of the recesses and cause at least the actuator member to move axially to apply the brake.

The actuator member acts in a similar manner to that of a trailing shoe in a shoe-drum brake, being urged, when the brake is applied, in a direction opposite to the normal forward direction of disc rotation.

This improves the stability of the brake and makes the brake less susceptible to friction changes which can affect the effort required to generate the braking force. Stated another way, ensuring that no servo-effect occurs when the brake is applied for normal forward direction of disc rotation, and that the brake-applying load is in opposition to the direction of disc rotation, the proportion of load required to generate the braking force will be a substantial part of the total input load which also has to overcome spring and like opposing forces before the braking force can be generated.

This makes it possible for us to provide similar brakes for corresponding wheels on opposite sides of a vehicle and between which the work will be shared substantially equally when both brakes are applied simultaneously.

The actuator member preferably comprises a pressure plate which is centred by stationary pilot lugs in the housing.

The reaction member may comprise the end wall of the housing itself or of a casing to which the housing which accommodates the disc is secured.

Alternatively the actuator member and the reaction member may comprise a pair of pressure plates which are disposed between a pair of rotatable discs in the housing and are both centred by stationary pilot lugs with the reaction member being keyed against rotation with respect to the housing but being axially slidable with respect to the housing.

In either construction the actuator member will be carried round with the friction disc to provide a servo-action, when the friction disc is rotating in reverse direction.

In a modified construction the frictional engagement between the actuator member and the pilot lugs can be reduced, in turn to reduce the forces which are to be overcome before the braking force can be generated. This therefore increases the relative proportion of the load required to generate the braking force.

The frictional engagement between the actuator member and the pilot lugs can be reduced by providing inserts of low-friction material in the edges of the actuator member where they engage the pilot lugs, or by removing the material of the actuator member where it would otherwise engage with the pilot lugs.

A non-rotatable, axially movable, plate may be interposed between the actuator member and the friction disc to prevent the actuator member from being carried round with the friction disc, and thus prevent a servo-action from being developed, when the disc is rotating in the reverse direction.

One embodiment of our invention and some modifications are illustrated in the accompanying drawings in which:-

Figure 1 is an end elevation of a disc brake of the spreading type;

Figure 2 is a section on the line 2-2 of Figure 1;

Figure 3 is an end elevation of the acutator mechanism of the brake of Figures 1 and 2;

Figure 4 is a section on the line 4-4 of Figure 3;

Figure 5 is an end elevation of a portion of the reaction member in the region of a stop abutment pin;

Figure 6 is a section on the line 6-6 of Figure 5;

Figure 7 is an end elevation of a portion of the actuator member in the region of the stop abutment pin;

Figure 8 is a section on the line 8-8 of Figure 7;

Figure 9 is a section on the line 9-9 of Figure 3; and

Figure 10 is a section similar to Figure 9 but showing a modification.

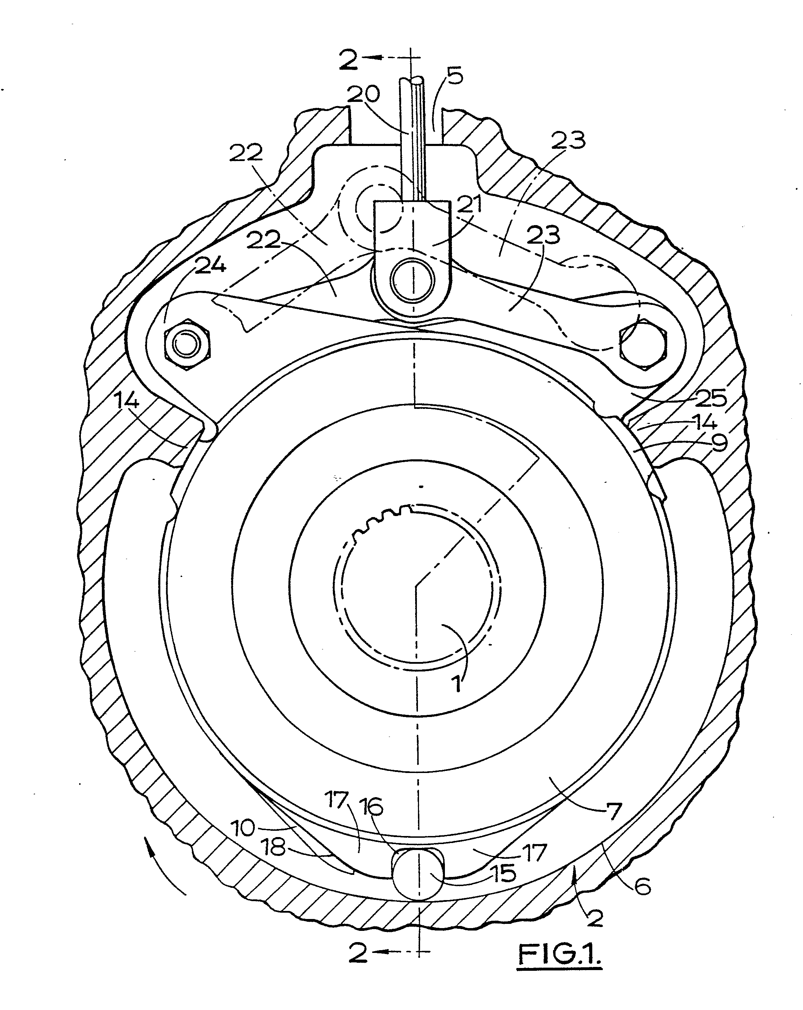

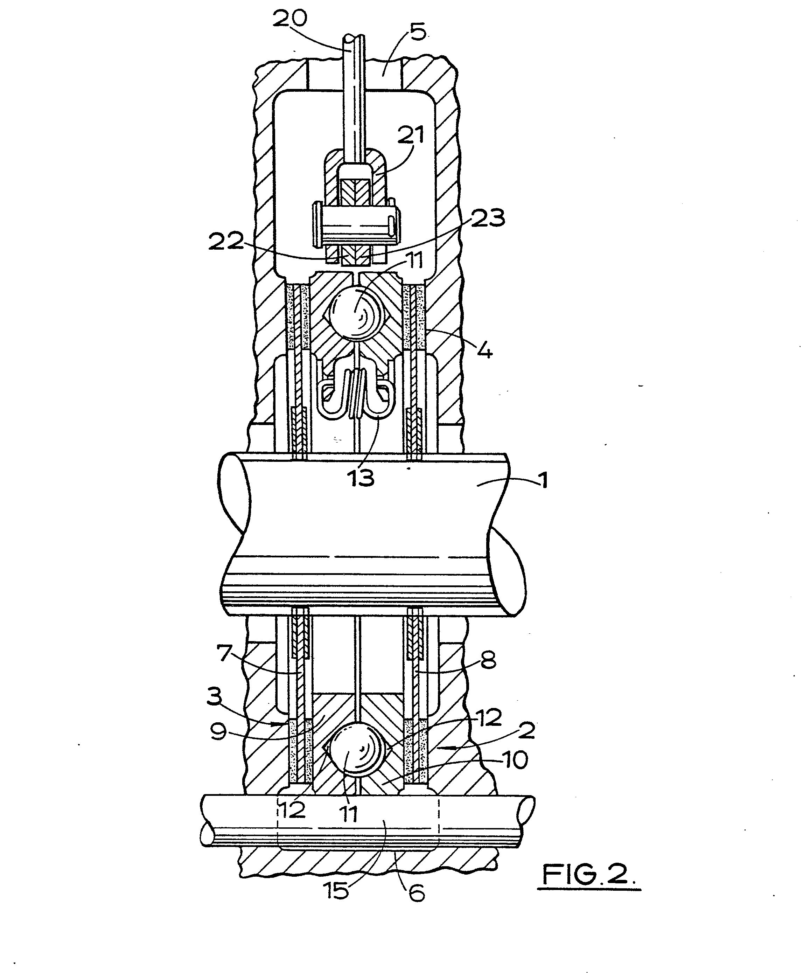

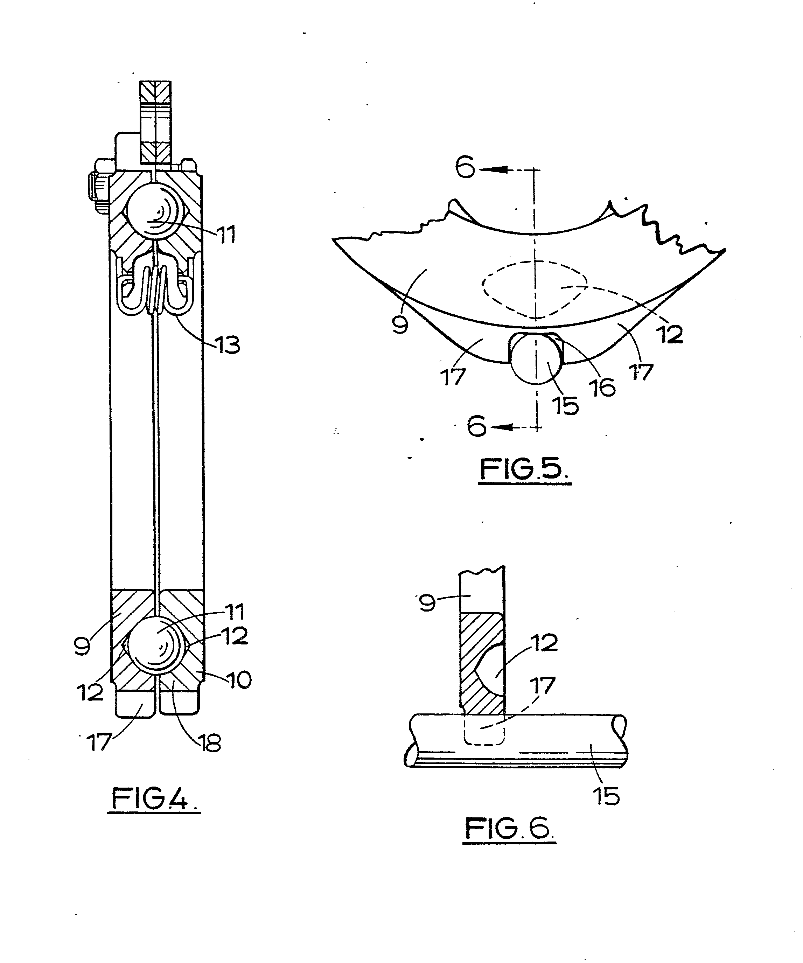

The brake illustrated in Figures 1 to 9 of the accompanying drawings may be of the "oil immersed" or the dry type and is suitable for use in tractors and like vehicles.

As illustrated a shaft 1 forming a part of a reduction drive mechanism to a wheel extends through a housing 2 which is provided with axially spaced end walls defining radial braking surfaces 3 and 4 of annular outline, and an aperture 5 is provided in the uppermost portion of the continuous, generally cylindrical, side wall 6. A pair of friction discs 7, 8 located between the surfaces are slidably keyed to the shaft 1.

An expander mechanism is located between the discs 7, 8. The mechanism comprises two pressure plates 9, 10 in the form of rings which are located between the discs 7 and 8, and balls 11 located in oppositely inclined co-operating recesses 12 in adjacent faces of the plates 9 and 10. Normally the plates 9 and 10 are urged towards each other by tension return springs 13 with the balls 11 located at the bases of the recesses 12. The plates are centred on angularly spaced pilots 14 and 15 in the housing of which the pilots 14 comprise a pair of lugs which are integral with the side wall 6 of the housing and are symmetrically arranged with respect to the opening 5, and the pilot 15 comprises an abutment pin which extends axially between the end walls of the housing 2.

The pressure plate 9 comprises a reaction member which is axially movable with respect to the shaft 1 but is keyed against rotation by the engagement of the pin 15 in a circumferentially extending notch 16 defined between a pair of radial lugs 17 in the plate 9. The notch 16 is of a circumferential length substantially equal to the diameter of the pin 15.

The pressure plate 10 comprises an acutator member mounted in the brake for relative angular movement with respect to the reaction member 9. Such angular movement of the pressure plate 10 is permitted by the provision, between a pair of radial lugs 18, of a notch 19 in which the pin 15 is received but which is of substantial length in a circumferential direction.

The pressure plates 9 and 10 can be constructed from dimensionally similar members but with the length of the notch increased to form the plate 10.

A pull-rod 20 coupled at its outer end to a brake-actuating device (not shown) carries at its inner end a bifurcated fitting 21 which is coupled to the outer ends of a pair of toggle links 22, 23 of which the inner ends are pivotally connected to radial lugs 24 and 25 on the respective plates 9 and 10.

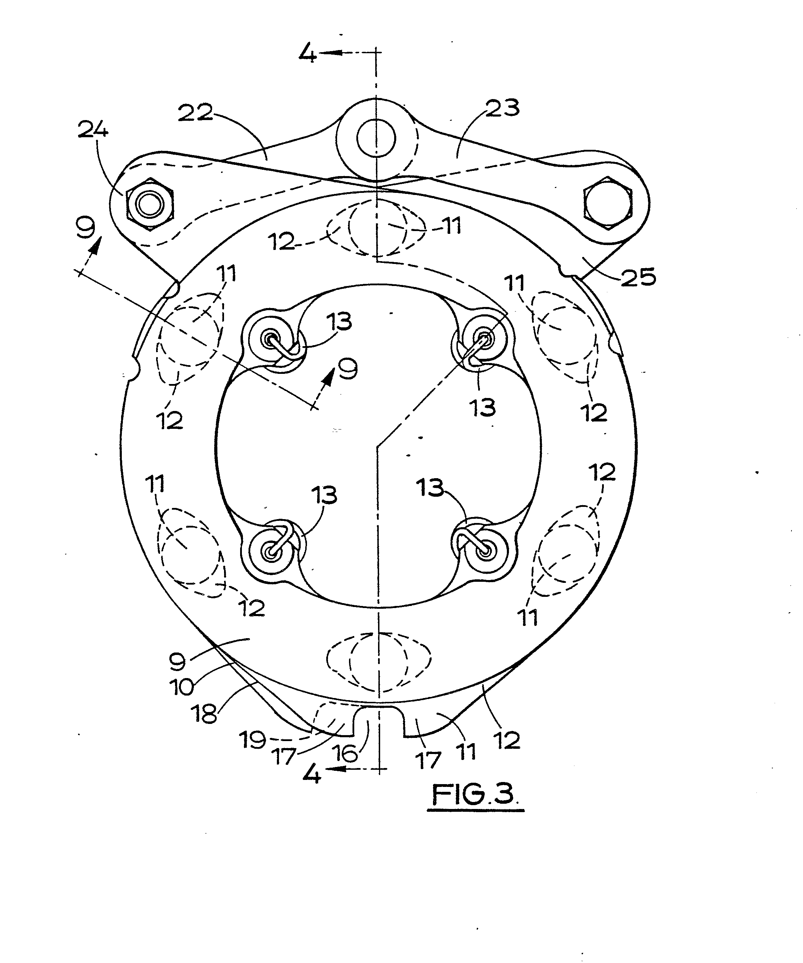

In an "off" position of the brake, with the discs 7 and 8 rotating in a normal forward clockwise direction, the components are in the relative positions shown in Figures 1 and 3 of the drawings. The lug 18 on the actuator plate 10 which is adjacent to the lug 25 is in abutment with the pin 15 and the balls 11 are disposed at the bottom of their recesses 12 due to the force in the springs 13.

To apply the brake a brake-applying force is applied to the pull-rod 20 which is moved radially outwards. This draws the toggle links 22 and 23 and the lugs 24 and 25 relatively towards each other, and the links 22 and 23 move to the position shown in chain-dotted lines in Figure 1. Since the plate 9 and, in consequence, the lug 24, is held against angular movement, the relative movement between the toggle links 22 and 23 acts to move the actuator plate 10 angularly in a direction opposite to the direction of rotation of the discs 7 and 8. This causes the balls 11 to tend to ride out of the recesses 12 thereby urging the plates 9 and 10 apart and into engagement with the friction discs 7 and 8 which are urged into engagement with the radial surfaces 3 and 4 in the housing 2.

Since the pull-rod 20 is operative to urge the plate 10 angularly in the opposite direction to that in which the discs 7 and 8 are rotating, the plate 10 acts in the same manner as a trailing shoe in a shoe-drum brake and no servo or self-energising effect is achieved.

When the brake is applied with the direction of rotation reversed, the plate 10 will be carried round with the discs 7 and 8 and a servo or self-energising effect will be produced to intensify the braking force.

This effect can be prevented by inserting between the pressure plate 10 and the friction disc 8 an intermediate axially movable plate (not shown) which is keyed against rotation, for example by means of a slot receiving the pin 15 in a similar manner to that of the pressure plate 9.

8

In order to reduce the reaction force which has to be overcome before a braking force can be generated as shown in Figure 9 the edges of the plate 10 where they engage with the pilots 14 and 15 are provided with anti-friction inserts 30 of a low-friction material. This reduces the resistance to movement of the plate 10 with respect to the housing.

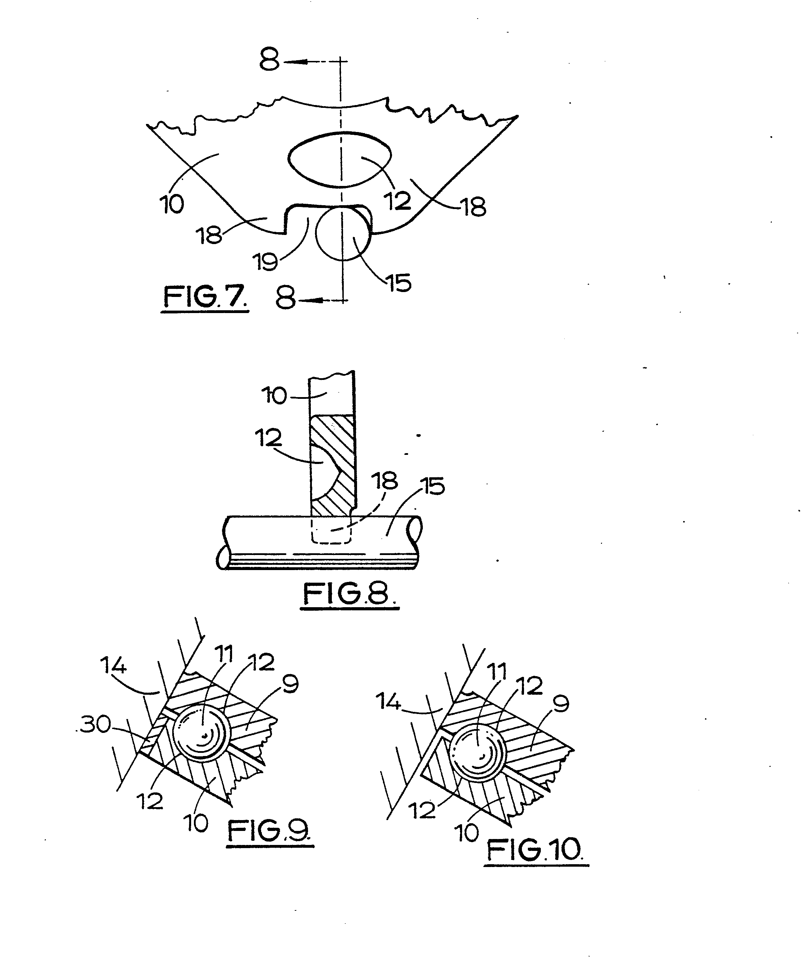

Similarly, in another construction shown in Figure 10, the edges of the plate 10 where they would normally engage with the pilots 14 and 15 are cut-away or shaved down to reduce the frictional engagement between the plate 10 and the housing.

In a modification of the brake described above the end wall which defines the braking surface 4 is omitted from the housing 2 and the braking surface 4 is constituted by a radial surface on a fixed casing from which the shaft 1 projects and against which the free end of the cylindrical side wall 6 is clamped.

## CLAIMS

1.   A disc brake for a vehicle in which at least one friction disc (7) rotatable within a stationary housing (2) is adapted to be moved into engagement with a relatively stationary surface (3), and actuating means are provided for moving the disc (7) into engagement with the said surface (3) to apply the brake, characterised in that the actuating means comprises a rotatable actuator member (10), a non-rotatable reaction member (9), balls or rollers (11) located in oppositely inclined recesses (12) in adjacent faces of the two members (9, 10), and means (22, 23) for moving the actuator member (10) angularly in the housing (1) about the axis of the brake in a direction opposite to the normal direction of forward rotation of the friction disc (7) whereby to cause the balls or rollers (11) to tend to ride out of the recesses (12) and cause at least the actuator member (10) to move axially to apply the brake.

2.   A disc brake according to claim 1, characterised in that the actuator member (10) comprises a pressure plate which is centred by stationary pilot lugs (14, 15) in the housing (1).

3.   A disc brake according to claim 1 or claim 2, characterised in that the reaction member comprises an end wall of the housing (1) itself.

4.   A disc brake according to claim 1 or claim 2, characterised in that the reaction member comprises an end wall of a casing to which the housing (1) which accommodates the disc is secured.

5. A disc brake according to claim 1 or claim 2, characterised in that the actuator member (10) and the reaction member (9) comprise a pair of pressure plates which are disposed between a pair of rotatable discs (7, 8) in the housing (1) and are both centred by stationary pilot lugs (14, 15) with the reaction member being keyed against rotation with respect to the housing but being axially slidable with respect to the housing.

6. A disc brake according to claim 5, characterised in that the frictional engagement between the actuator member (10) and the pilot lugs (14, 15) is reduced, in turn to reduce the forces which are to be overcome before the braking force can be generated.

7. A disc brake according to claim 6, characterised in that the frictional engagement between the actuator member (10) and the pilot lugs (14, 15) is reduced by providing inserts (30) of low-friction material in the edges of the actuator member (10) where they engage the pilot lugs.

8. A disc brake according to claim 6, characterised in that the frictional engagement between the actuator member (10) and the pilot lugs (14, 15) is reduced by removing the material of the actuator member (10) where is would otherwise have engaged with the pilot lugs.

9. A disc brake according to any preceding claim, characterised in that a non-rotatable, axially movable, plate is interposed between the actuator member and the friction disc to prevent the actuator member from being carried round with the friction disc, and thus prevent a servo-action from being developed, when the disc is rotating in the reverse direction.

0109230

FIG.1.

FIG.2.

0109230

**FIG.3.**

0109230

FIG.4.

FIG.5.

FIG.6.

0109230

FIG.7.

FIG.8.

FIG.9.

FIG.10.

European Patent Office

**EUROPEAN SEARCH REPORT**

| | DOCUMENTS CONSIDERED TO BE RELEVANT | | EP 83306687.1 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | AU - A - 430 903 (INTERNATIONAL HARVESTER)<br>* Page 5, lines 27-30 *<br>-- | 7 | F 16 D 55/14 |
| A | GB - A - 1 020 091 (GIRLING LTD)<br>* Page 3, lines 13-20 *<br>-- | 8 | |
| A | DE - B2 - 2 018 728 (KLAUE)<br>* Claim 1 *<br>-- | 9 | |
| A | GB - A - 2 067 692 (LUCAS INDU-STRIES)<br>* Totality *<br>-- | | |
| A | GB - A - 1 531 168 (GIRLING LTD)<br>* Totality *<br>-- | | **TECHNICAL FIELDS SEARCHED (Int. Cl. ³)** |
| A | GB - A - 1 487 595 (GIRLING LTD)<br>* Totality *<br>-- | | F 16 D 55/02<br>F 16 D 55/04<br>F 16 D 55/14 |
| A | US - A - 3 842 948 (FREDRICK)<br>* Totality *<br>---- | | F 16 D 55/16<br>F 16 D 55/18 |

The present search report has been drawn up for all claims

| Place of search | Date of completion of the search | Examiner |
|---|---|---|
| VIENNA | 16-02-1984 | KAMMERER |